# EUROPÄISCHE PATENTANMELDUNG

(11) **EP 0 900 714 A2**
(43) Veröffentlichungstag der Anmeldung: **10.03.1999**
(21) Anmeldenummer: 98115041.0
(22) Anmeldetag: 11.08.1998
(51) Int. Cl.: B62D 25/00

(54) **Fahrzeug mit einem zu öffnenden Verdeck**

(30) Priorität: 05.09.1997 DE 19738828
(71) Anmelder: DAIMLER-BENZ AKTIENGESELLSCHAFT, 70567 Stuttgart (DE)
(72) Erfinder: Hölzel, Günter, 73269 Hochdorf (DE); Maier, Franz, 73553 Alfdorf (DE)

(57) **Zusammenfassung**

Die Erfindung bezieht sich auf ein Fahrzeug (1) mit einem zu öffnenden Verdeck, dessen offener Wagenkasten (5) durch einen Versteifungsrahmen (8) verstärkt ist, wobei sich seitliche Schenkel des insgesamt etwa U-förmigen Versteifungsrahmens (8) mit ihren über das Querjoch (9) verbundenen Endbereichen (8c) hinter einem Sitzbereich der Fahrgastzelle nach oben erstrecken, und wobei eine verdeckte Anordnung des Versteifungsrahmens (8) vorgesehen ist, wozu die Endbereiche (8c) gegenüber der Außenkontur der zugeordneten Seitenwand zurückspringend angeordnet sind.

Erfindungsgemäß stehen die über das Querjoch (9) miteinander verbundenen Endbereiche (8c) der seitlichen Schenkel des Versteifungsrahmens (8) als Überrollbügel aus dem Wagenkasten (5) heraus und es ist eine den Überrollbügel mitüberdeckende Verdeckkonstruktion vorgesehen.

## Beschreibung

Die Erfindung betrifft ein Fahrzeug mit einem zu öffnenden Verdeck der im Oberbegriff des Hauptanspruches angegebenen Art.

Eine derartiges Fahrzeug ist druckschriftlich z. B. aus der DE 83 34 199.4 U1 als bereits bekannt zu entnehmen. Die für ein Cabriolet mit Faltverdeck vorgesehene Karosserie ist selbsttragend ausgebildet und weist keine den offenen Wagenkasten schließende Dachpartie auf.

Damit der offene Wagenkasten ohne die stützende Dachpartie und trotz der die Seitenwände schwächenden Türöffnungen die nötige Stabilität erhält, ist im Wagenkasten versenkt ein Versteifungsrahmen angebracht, der insgesamt etwa U-förmig gestaltet ist. Die seitlicher Schenkel des Versteifungsrahmens erstrecken sich dabei von einem bodennahen Schwellerbereich der Karosserie ausgehend entlang der ihnen zugeordneten Seitenwand nach hinten oben bis zum nahe unterhalb der Bordwandoberkante angeordneten Querjoch des Versteifungsrahmens, mit dem sie fest verbunden sind. Da der Versteifungsrahmen von entsprechenden Karosseriebereichen verdeckt wird, ist er von außen nicht ohne weiteres sichtbar.

Als nachteilig ist bei der bekannten Fahrzeugkarosserie der Umstand anzusehen, daß der Insassenschutz bei einem Überschlag des Fahrzeugs unzureichend ist, da lediglich der Rahmen der Windschutzscheibe gegenüber den Bordwänden nach oben übersteht.

Der Erfindung liegt die Aufgabe zugrunde, ein Fahrzeug der gattungsgemäßen Art mit geringem technischen Aufwand dahingehend weiterzuentwickeln, daß der Insassenschutz bei einem Überschlag des Fahrzeugs deutlich verbessert ist.

Die erfindungsgemäße Lösung dieser Aufgabe ist Gegenstand der kennzeichnenden Merkmale des Hauptanspruchs.

Aus den übrigen Ansprüchen sind vorteilhafte Ausgestaltungen der Erfindung zu entnehmen.

Beim Erfindungsgegenstand wird in vorteilhafter Weise der ohnehin zur Aussteifung des Fahrzeugs erforderliche Verstärkungsrahmen als Überrollbügel ausgebildet.

Damit durch den feststehenden Überrollbügel die Verdeckbetätigung nicht behindert wird, ist als Verdeckkonstruktion vorzugsweise ein mehrteiliges Festdach unter Nutzung des Überrollbügels als Tragstruktur vorgesehen.

Vorzugsweise verläuft das Querjoch des Überrollbügels im Bereich einer Anschlußfuge zwischen dem Rückfensterteil und dem davorliegenden Dachteil, wodurch der Überrollbügel zur Befestigung beider angrenzenden Dachteile genutzt werden kann.

Um eine zuverlässige Abdichtung eines hinter der Dachkonstruktion angeordneten Heckstauraums zu erreichen, ist das Rückfensterteil zu einem den Heckstauraum mitüberdeckenden Heckdeckel verlängert.

Damit eine hintere Türöffnung des Fahrzeugs unmittelbar vom zugeordneten Endbereich des Überrollbügel begrenzt werden kann, sind die Bordwandoberkanten des Wagenkastens im hinteren Seitenfensterbereich entsprechend hochgezogen.

Vorzugsweise ist der Versteifungsrahmen in die tragende Struktur des Wagerkastens integriert, weil dadurch eine besonders kompakte und gewichtsgünstige Bauweise möglich wird.

Falls das Raumkonzept des Fahrzeugs dies zuläßt, können Mittelbereiche des Versteifungsrahmens über eine Stirnwand des Wagenkastens miteinander verbunden sein. Hierdurch wird insbesondere die Verwindungssteifigkeit des Aufbaus verbessert.

Damit ein Wagenkasten mit beidseitig angeordneten, in Fahrzeuglangsrichtung gegeneinander versetzten Seitentüren und entsprechend geschwächten Seitenwänden nicht allein mittels des Versteifungsrahmens verstärkt werden muß, ist für den Wagenkasten eine dicke, verwindungsversteifende Bodenanlage vorgesehen.

Um das Fahrzeuggewicht durch Verstärkungsmaßnahmen nicht mehr als nötig zu erhöhen, bestehen zumindest Teile der tragenden Struktur des Wagenkastens aus Leichtmetall. So kann die Rahmenstruktur vorteilhaft aus Aluminium-Strangpreßprofilen bestehen, die über Aluminium-Gußknoten miteinander verbunden werden (Space-Frame-Technik an sich bekannter Art). Für flächige Teile der Bodenanlage, die Stirnwand oder auch Seitenwandbereiche des Wagenkastens lassen sich außerdem Leichtbauplatten in Sandwichbauweise verwenden, die zwei Deckbleche sowie einen zwischen den Deckblechen liegenden Kern aus Aluminiumschaum umfassen. Solche Leichtbauplatten mit Aluminiumschaum zeichnen sich neben der Steifigkeitverbesserung durch eine gute Wärme- und Schallisolierung aus.

Nachfolgend ist ein Ausführungsbeispiel der Erfindung anhand einer zeichnerischen Darstellung näher erläutert. In der Darstellung zeigen:
- Fig. 1: eine Seitenansicht eines Fahrzeug mit abnehmbarem Festdach, dessen Wagenkasten mit einem Versteifungsrahmen verstärkt ist,
- Fig. 2: eine perspektivische Schrägansicht des Fahrzeugs von hinten bei geschlossenem Festdach,
- Fig. 3: eine perspektivische Schrägansicht der tragenden Wagenkastenstruktur des Fahrzeugs und
- Fig. 4: eine Seitenansicht des Überrollbügelbereichs bei hochgeklapptem Rückfensterteil.

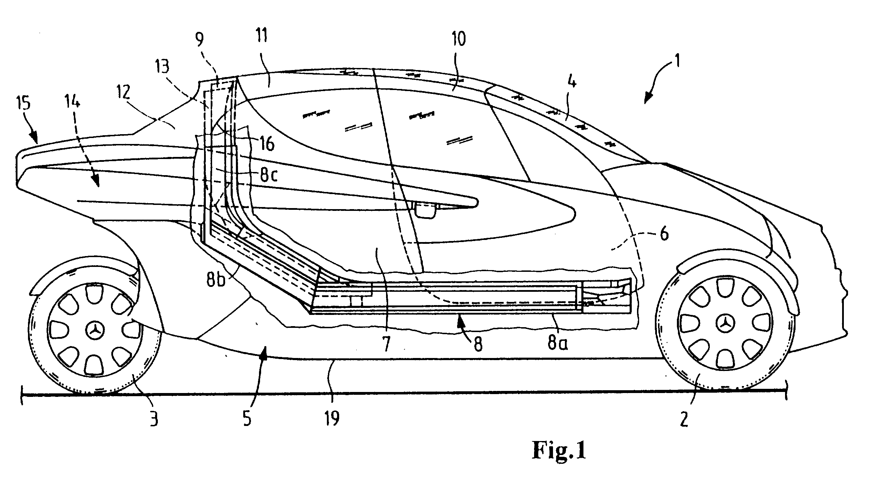

Ein in Fig. 1 gezeigtes Cabriolet 1 ist dreirädrig ausgebildet, wobei es zwei gelegte Vorderräder 2 und ein mittig zwischen diesen angeordnete Hinterrad 3 aufweist. Die Erfindung wäre jedoch ebenso bei einem vierrädrigen Fahrzeug realisierbar.

Damit sich das Dach des Cabriolets 1 hinter der seitlich von A-Säulen begrenzten Windschutzscheibe 4 vollständig öffnen läßt, weist die Karosserie einen tragenden Wagenkasten 5 auf. Die Seitenwände des Wagenkastens 5 sind jedoch auf der linken Fahrzeugseite durch eine vordere Seitentür 6 und auf der rechten Fahrzeugseite durch eine hintere Seitentür 7 erheblich geschwächt. Eine rechte vordere Seitentür und eine hintere linke Seitentür sind nicht vorhanden, sondern der Wagenkasten 5 ist in diesen Bereichen geschlossen. Jedoch ist hierdurch keine nennenswerte Aussteifung des Wagenkastens 5 gegeben, zumal eine gewisse Längenüberdeckung der Seitentüröffnungen vorliegt.

Um die erforderliche Aussteifung des Wagenkastens 5 herbeizuführen, ist ein insgesamt etwa U-förmiger Versteifungsrahmen 8 vorhanden, der seitlich jeweils einen etwa horizontal verlaufenden vorderen Endbereiche 8a, daran anschließend einen schräg nach hinten oben gerichteten Mittelbereich 8b und danach einen etwa senkrechten Endbereich 8c umfaßt. Der vordere Endbereich 8a erstreckt sich vorn von der zugeordneten A-Säule ausgehend etwa auf Höhe das Türschwellers der Seitentür 6 nach hinten und endet mit dem horizontalen Längenbereich des Türschwellers der Seitentür 7, wobei die Endbereiche 8a entlang der jeweils zugeordneten Seitentür 6 bzw. 7 den Türschweller bilden. Die Türöffnung der Seitentür 7 begrenzend verläuft der Mittelbereich 8b schräg nach hinten oben, wobei er mit dem Endbereich 8a einen stumpfen Winkel von ca. 140 Grad einschließt. Der Mittelbereich endet etwa auf halber Höhe der Türöffnung und geht dabei in den annähernd senkrecht verlaufenden Endbereich 8c über. Dieser Endbereich 8c liegt hinter den Sitzplätzen im Fahrgastraum und ragt über die vorgesehene Kopfhöhe der Insassen hinaus Am ihrem oberen Ende sind die Endbereiche 8c über ein die Dachbreite überspannendes Querjoch 9 zu einem Überrollbügel miteinander verbunden, wobei die Endbereiche 8c gegenüber der Außenseite der Seitenwandkontur zurückspringend angeordnet sind.

Der bezogen auf die Längsmittelebene des Cabriolets 1 spiegelsymmetrisch ausgebildete Überrollbügel ist bei geschlossenem Dach vollständig verdeckt und somit von außen nicht ohne weiteres sichtbar, wird jedoch in vorteilhafter Weise als tragende Struktur für die Verdeckkonstruktion genutzt. Die Dachkonstruktion umfaßt zwei plattenartige Dachteile 10 und 11, die den Fahrgastraum zwischen Windschutzscheibe 4 und Querjoch 9 des Überrollbügels überdecken und ein Rückfensterteil 12 mit einer steil zwischen seitlichen Pfosten angeordneten Heckscheibe 13.

Das Dachteil 10 ist vorn leicht lösbar am Rahmen der Windschutzscheibe 4 und hinten an der vorderen Stirnseite des Dachteils 11 befestigt, während das Dachteil 11 an seiner hinteren Randseite leicht lösbar mit dem Querjoch 9 des Überrollbügels verbunden ist.

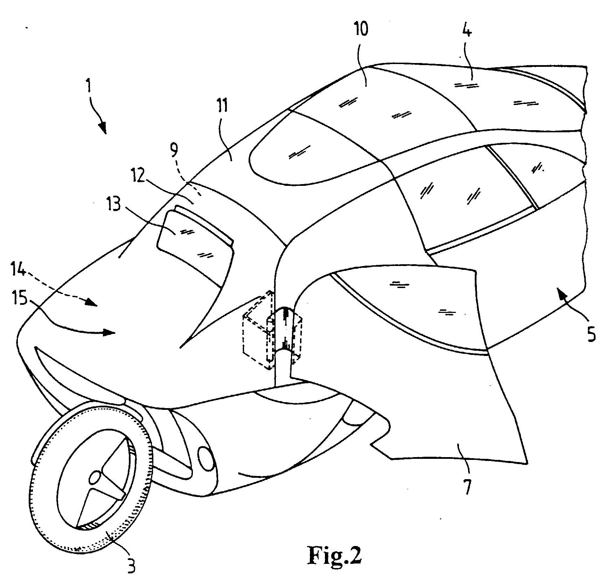

Damit der Fahrgastraum des Cabriolets 1 auch bei geschlossenem Verdeck sehr gut belichtet ist, besteht das Dachteil 10 aus einem verglasten Tragrahmen. Dieser Tragrahmen weist seitliche, in der Verlängerung der A-Säulen verlaufende Dachrahmen auf, die sich in seitlichen Dachpfosten des Dachteils 11 fortsetzen, wie in Fig. 2 deutlich zu erkennen ist. Der Abstand zwischen den Dachrahmen wird von einer durchsichtigen Scheibe aus Glas überbrückt, die flächenbündig eingeklebt ist. Demgegenüber ist das Dachteil 11 nur in einem etwa halbkreisförmigen Mittelbereich lichtdurchlässig verglast.

Durch Entriegeln und Abnehmen der Dachteile 10 und 11 läßt sich das Verdeck in einer ersten Öffnungsstufe von der Windschutzscheibe 4 bis zum Querjoch 9 des Überrollbügels öffnen. Hierdurch liegt eine sogenannte Targastellung des Cabriolets 1 vor. Zweckmäßig lassen sich die Dachteile in einem Heckstauraum des Cabriolets 1 unterbringen und dadurch unterwegs mitführen. Um eine vollständige Offenstellung des Cabriolets 1 herbeizuführen, läßt sich zusätzlich zu den Dachteilen 10 und 11 noch das Rückfensterteil 12 abnehmen.

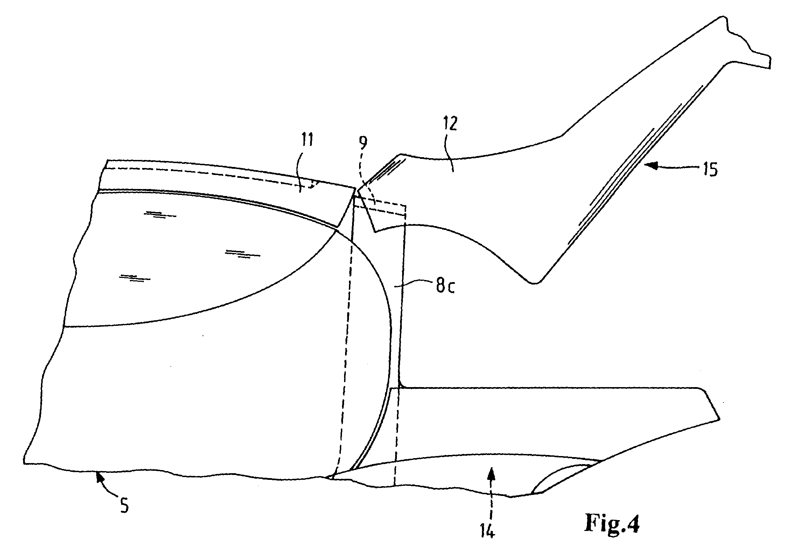

Damit die Abdichtungsproblematik des Rückfensterteils 12 gegenüber dem Heckstauraum 14 des Cabriolets 1 wegfällt, ist das Rückfensterteil 12 zu einer auch den Heckstauraum 14 abdeckenden Heckklappe 15 verlängert. Die Heckklappe 15 ist insgesamt über nicht gereigte Steckscharniere um eine horizontale Fahrzeugquerachse schwenkbar gelagert und wird über ein ebenfalls nicht gezeigtes Heckdeckelschloß mit üblicher Druckknopfbetätigung zugehalten. Nach dem Entriegeln des Schlosses läßt sich die Heckklappe 15, wie im Zusammenhang mit Fig. 4 deutlich zu erkennen ist, in eine Belade- bzw. Entladestellung hochklappen oder durch Aushaken der beiden Scharniere vom Querjoch 9 abnehmen.

Die Bordwandoberkante des Wagenkastens 5 bzw. der Seitenwandbeplankung ist im hinteren Seitenfensterbereich unter einer harmonischen Krümmung hochgezogen und läuft auf die Anschlußfuge zwischen Dachteil 11 und Rückfensterteil 12 zu, wo sie an einer gebogenen Anschlußfuge 16 zwischen der Unterseite des Rückfensterteils 12 und der zugeordneten Seitenwandbeplankung bzw. Beplankung der Seitentür 7 endet. Somit werden die Endbereiche 8c unterhalb des Rückfensterteils 12 von Beplankungsteilen verdeckt.

Da die hintere Seitentür 7 über ein Zentralscharnier mit ihrer rückwärtigen Stirnseite am Wagenkasten 5 angeschlagen ist, läßt sich die Türöffnung für einen bequemen Einstieg bis zum an der Bildung der Rahmenöffnung beteiligten Endbereich 8c öffnen.

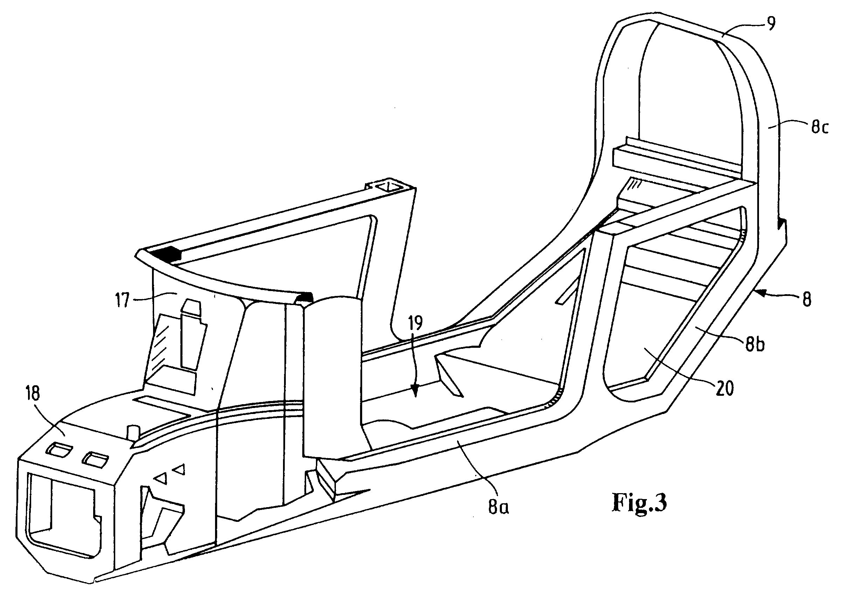

Wie in Fig. 3 sichtbar ist, bildet der Versteifungsrahmen 8 in seinem Anordnungsbereich die tragende Struktur bzw. ein Chassis des Wagenkastens 5. Hierdurch wird für die Anordnung des Versteifungsrahmens 8 kaum zusätzlicher Bauraum benötigt. Lediglich im Bereich der vom Überrollbügel umrissenen Fahrzeugquerebene kann es durch die geringfügig weiter in den Fahrgastraum hineinragenden Endbereiche 8c zu einer leichten Reduzierung der Innenraumbreite kommen, die sich jedoch kaum störend auswirkt.

Vorn wird der Fahrgastraums des Wagenkastens 5 von einer stabilen, mit Querträgern verstärkten Stirnwand 17 begrenzt, die nach vorn auskragend den Rahmenkopf 18 zum Anschluß der nicht gezeigten Vorderradaufhängungen trägt. Über die Stirnwand 17 sind auch die vorderen Endbereiche 8a miteinander verbunden.

Um die Schwächung der Seitenwände des Wagenkastens 5 durch die Türöffnungen nicht allein mittels des Versteifungsrahmens 8 ausgleichen zu müssen, ist der Boden des Wagenkastens 5 als dicker Hohlboden 19 in Spantenbauweise mit Unterboden und Innenraumboden ausgeführt. Dabei ist der Hohlboden 19 zur weiteren Erhöhung insbesondere der Verwindungssteifigkeit des Wagenkasten 5 zweckmäßig zu einer Trennwand 20 entsprechend dem Verlauf des Versteifungsrahmens 8 hochgezogen, wobei die schrägen Mittelbereiche 8b durch die hier als Motorraumtrennwand dienende Trennwand 20 miteinander verbunden sind.

Der Versteifungsrahmen 8 sowie alle Rahmenelemente der in Fig. 3 sichtbaren Struktur des Wagenkastens 5 bestehen aus Aluminium, was eine insgesamt gewichtsgünstige Gestaltung des Cabriolets 1 ermöglicht.

## Patentansprüche

1. Fahrzeug mit einem zu öffnenden Verdeck, dessen offener Wagenkasten durch einen Versteifungsrahmen verstärkt ist, wobei sich seitliche Schenkel des insgesamt etwa U-förmigen Versteifungsrahmens mit ihren über das Querjoch verbundenen Endbereichen hinter einem Sitzbereich der Fahrgastzelle nach oben erstrecken, und wobei eine verdeckte Anordnung des Versteifungsrahmens vorgesehen ist, wozu die Endbereiche gegenüber der Außenkontur der zugeordneten Seitenwand zurückspringend angeordnet sind,
**dadurch gekennzeichnet**,
daß die über das Querjoch ( 9 ) miteinander verbundenen Endbereiche ( 8 c ) der seitlichen Schenkel des Versteifungsrahmens ( 8 ) als Überrollbügel aus dem Wagenkasten ( 5 ) herausstehen und eine den Überrollbügel mitüberdeckende Verdeckkonstruktion vorgesehen ist.

2. Fahrzeug nach Anspruch 1,
**dadurch gekennzeichnet**,
daß die Verdeckkonstruktion als mehrteiliges, abnehmbares Festdach ausgebildet ist, wobei die an das Querjoch ( 9 ) des Überrollbügels angrenzenden Dachteile ( 11 und Rückfensterteil 12) am Querjoch ( 9 ) befestigbar sind.

3. Fahrzeug nach Anspruch 2,
**dadurch gekennzeichnet**,
daß bei geschlossener Verdeckkonstruktion am Querjoch ( 9 ) des Überrollbügels ein Dachteil ( 11 ) und ein Rückfensterteil ( 12 ) abgestützt sind.

4. Fahrzeug nach Anspruch 3,
**dadurch gekennzeichnet**,
daß das Rückfensterteil ( 12 ) der Verdeckkonstruktion zu einer einen Heckstauraum ( 14 ) des Fahrzeugs ( Cabriolets 1 ) mitüberdeckenden Heckklappe ( 15 ) verlängert ist.

5. Fahrzeug nach Anspruch 2,
**dadurch gekennzeichnet**,
daß die Bordwandoberkante des Wagenkastens ( 5 ) im hinteren Seitenfensterbereich derart hochgezogen ist, daß ein unterhalb des Rückfensterteils ( 12 ) liegender Abschnitt der Endbereiche ( 8 c ) bis zu einer Anschlußfuge ( 16 ) des Rückfensterteils ( 12 ) von der Seitenwandbeplankung abgedeckt ist .

6. Fahrzeug nach Anspruch 1,
**dadurch gekennzeichnet**,
daß sich die über das Querjoch ( 9 ) zu einem Überrollbügel miteinander verbundenen Endbereiche ( 8 c ) nahezu senkrecht stehend angeordnet sind.

7. Fahrzeug nach Anspruch 6,
**dadurch gekennzeichnet**,
daß die Endbereiche ( 8 c ) über schräg nach unten vorn verlaufende Mittelbereiche ( 8b ) mit etwa horizontal verlaufenden vorderen Endbereichen ( 8 a ) des Versteifungsrahmens ( 8 ) verbunden sind.

8. Fahrzeug nach Anspruch 7,
**dadurch gekennzeichnet**,
daß die Mittelbereiche ( 8 b ) des Versteifungsrahmens ( 8 ) über eine Trennwand ( 20 ) des Wagenkastens ( 5 ) miteinander verbunden sind.

9. Fahrzeug nach Anspruch 8,
**dadurch gekennzeichnet**,
daß der Versteifungsrahmen ( 8 ) in die tragende Struktur des Wagenkastens ( 5 ) integriert ist.

10. Fahrzeug nach Anspruch 1,
**dadurch gekennzeichnet**,
daß die Seitenwände des Fahrzeugs ( Cabriolets 1 ) durch versetzt angeordnete Türöffnungen ( Seitentüren 6 und 7 ) geschwächt sind und die tragende Struktur des Wagenkastens ( 5 ) einen dicken Hohlboden ( 19 ) umfaßt.

11. Fahrzeug nach Anspruch 9,
**dadurch gekennzeichnet**,
daß die tragende Struktur des Wagenkastens ( 5 ) zumindest teilweise aus Leichtmetall besteht.

12. Fahrzeug nach Anspruch 11,
**dadurch gekennzeichnet**,
daß die Rahmenelemente der tragenden Struktur des Wagenkastens ( 5 ) überwiegend aus Leichtmetallprofilen bestehen.
